# EUROPEAN PATENT APPLICATION

(11) **EP 1 094 387 A2**
(43) Date of publication of application: **25.04.2001**
(21) Application number: 00122314.8
(22) Date of filing: 20.10.2000
(51) Int. Cl.: G06F 9/45

(54) **Method and apparatus for compiling program for parallel processing, and computer readable recording medium recorded with parallelizing compilation program**

(30) Priority: 22.10.1999 JP 30131699
(71) Applicant: NEC CORPORATION, Tokyo (JP)
(72) Inventor: Obata, Masaya, Minato-ku, Tokyo (JP)
(74) Representative: VOSSIUS & PARTNER

(57) **Abstract**

A parallelizing compilation apparatus for generating object codes that can execute processing, which begin at the branch target where control transfers with higher probability, in advance of the execution of a conditional branch instruction in parallel with the processing prior to the conditional branch instruction without the rearrangement of basic blocks is provided. A branch dualizing section (13) determines, based on profile information (17), the truth probability of the evaluation value of the conditional expression in a conditional branch instruction included in intermediate codes. When the probability of "false" is higher, the branch dualizing section dualizes the conditional branch instruction into a conditional branch instruction whose conditional expression is the inversion of that in the dualized conditional branch instruction and whose branch target is the next instruction of the dualized conditional branch instruction. Conversely, when the probability of "true" is higher, the branch dualizing section inserts an unconditional branch instruction just after the dualized conditional branch instruction and sets the branch target thereof to the next instruction of this unconditional branch instruction. A branch inverting section (19) generates object codes in which the target address of conditional branch instructions and unconditional branch instructions are exchanged, when the determination relating to the truth probability using profile information is inverted with respect to that at the time of the generation of an object code file (16).

## Description

The present invention relates to a method and an apparatus for a parallelizing compiler which generates object codes that enables executing a plurality of processes in processors in parallel from a source program.

This application is based on Japanese Patent Application No. Hei 11-301316 (unpublished), the contents of which are incorporated herein by reference.

Techniques for automatically parallelizing a sequentially executable program with a compiler for use in a system (hereafter referred to as "control parallel architecture") with a mechanism, in which instruction sequences that follow other instruction sequences in the progress of control at the time of program execution (hereafter referred to as "control flow") are executed as "threads" in parallel with the other instruction sequences, are known.

An example of such techniques is disclosed in the paper, "Automatic Parallelizing Method for Control-Parallel Multi-Threaded Architecture", by Junji Sakai, Sunao Torii, Masaki Kondo, Naruhiro Ichikawa, Hitomi Omata, Naoki Nishi, Masato Edahiro, Information Processing Society of Japan, Information Processing Society Symposium Series, Vol. 98, No. 7, pp. 383 - 390, June 3, 1998.

The compiler with an automatic parallelizing function for control parallel architecture disclosed in this paper determines portions in a program that are executable in parallel by focusing on branch instructions. Such a parallelization technique leads to improved performance in execution of a program, because the overall processing ends earlier than in the case where the program is sequentially executed.

More specifically, the improvement in performance can be achieved by the following procedures: the conversion of a branch instruction being focused into a set of a fork instruction, a conditional terminating instruction, and a child thread aborting instruction (hereafter such three instructions are referred to as "set of fork instructions" or "fork instruction set") that are defined in the control parallel architecture; the execution of processing, which is specified by the fork instruction and corresponds to the processing that begins at the branch target of the branch instruction, on a processor in advance of the execution of the branch instruction in parallel with the processing on another processor that executes the branch instruction; transfer of control to the former processor, when the flow of control on the latter processor reaches the conditional terminating instruction and the condition thereof is satisfied.

Here, there are two kinds of branch instructions, unconditional branch instructions and conditional branch instructions. When the control reaches an unconditional branch instruction, the control always transfers to the processing which begins at the branch target of the unconditional branch instruction. On the other hand, when the control reaches a conditional branch instruction, if the evaluation value of the conditional expression in the conditional branch instruction is "true", the control transfers to the processing which begins at the branch target of the conditional branch instruction, otherwise if the evaluation value of the conditional expression is "false", the control transfers to the processing which begins at the address just after the address of the conditional branch instruction.

When determining portions that are executable in parallel by focusing on conditional branch instructions, a compiler with the aforementioned automatic parallelizing function for control parallel architecture always generates a code for executing processing, which is executed when the evaluation value of the conditional expression in a conditional branch instruction is "true", in advance of the execution of a conditional terminating instruction by means of a fork instruction.

Further, in order to improve the hit ratio of a cache and to prevent disorder in the control for a pipeline, an example of a compiler system utilizing profile information on control flow at the time of program execution is disclosed in the paper, "Profile Guided Code Positioning", by Ken Pettis and Robert C. Hansen, Proceedings of the ACM SIGPLAN '90 Conference on Programming Language Design and Implementation (PLDI)", pp. 16 - 27, June, 1990. In the compiler system described in this paper, techniques are used such that the control flow to be actually executed is identified by the reference to the profile information, and then basic blocks constituting the control flow are rearranged by changing the conditional expressions in a conditional branch instruction as well as the branch target thereof.

By applying such techniques, which change the conditional expression in a conditional branch instruction as well as the branch target thereof based on profile information, to the compiler system with the automatic parallelizing function for the aforementioned control parallel architecture, the compiler system increases the probability that the evaluation values of the conditional expressions in the conditional branch instructions become "true" in the actual program execution, and the conversion of control flows relating to conditional branch instructions into fork instruction sets leads to further improve the performance.

However, such a compiler system, which increases the probability that the evaluation values of the conditional expressions in conditional branch instructions become "true" by means of profile information and converts control flows relating to conditional branch instructions into fork instruction sets, causes the following problems.

One problem is that it is necessary to rearrange basic blocks, which constitute the processing flow, in order to increase the probability that the evaluation values of the conditional expressions in conditional branch instructions become "true" in accordance with the profile information, so that this rearrangement processing makes the compiling processing complicated.

Another problem is that since the basic blocks must be rearranged when the profile information has been changed, it is necessary to carry out a re-compilation (i.e., processing for generating an assembler program/code from a source program/code) that begins at syntax analysis processing for analyzing the syntax of a source program to be compiled.

Therefore, it is an object of the present invention to provide a method and an apparatus for a parallelizing compiler that can generate object codes for executing processing, which begins at the branch target of all branch targets of a conditional branch instruction where the control transfers with a higher probability, in advance of the execution of the conditional branch instruction in parallel, without the rearrangement of basic blocks which constitute processing flow.

A parallelizing compilation apparatus according to the present invention comprises: a syntax analyzing section for analyzing the syntax of a source program and outputting codes obtained by the syntax analysis: a profile information storing section for accumulating profile information on past results of execution of conditional branch instructions; a branch determining section for determining the higher probability of the probabilities that the evaluation value of the conditional expression in a conditional branch instruction included in the codes is true or false based on the profile information; a branch dualizing section for replacing a conditional branch instruction included in the codes with another conditional branch instruction as a first branch instruction in which the branch target points to the processing that begins at the branch target of the conditional branch instruction where the conditional branch instruction branches with higher probability, and an unconditional branch instruction as a second branch instruction in which the branch target points to the processing that begins at the branch target where the conditional branch instruction branches with lower probability, based on the determination result by the branch determining section; and a parallel optimizing section for converting the first branch instruction included in the codes output from the branch dualizing section into an instruction set for executing the processing beginning at the branch target of the first branch instruction in advance of the evaluation of the conditional expression in the first branch instruction, when the evaluation value of the conditional expression in the first branch instruction is true.

Accordingly, the present invention can generate object codes for executing processing, which begins at the branch target of all branch targets of a conditional branch instruction where the control transfers with a higher probability, in advance of the execution of the conditional branch instruction in parallel with the processing prior to the conditional branch instruction, without the rearrangement of the basic blocks which constitute the processing flow.

Additionally, even if the probability of transfer of control to the branch target of a conditional branch instruction may vary, the present invention can generate object codes for executing processing, which begins at the branch target of all branch targets of a conditional branch instruction where the control transfers with a higher probability, in advance of the execution of the conditional branch instruction in parallel with the processing prior to the conditional branch instruction, without recompilation.

Hereafter, an embodiment of the present invention will be explained in detail with reference to the attached drawings.
FIG. 1 is a block diagram showing the construction of a parallelizing compilation apparatus in accordance with an embodiment of the present invention.
FIG. 2 is a flowchart showing the operation of a branch dualizing section in accordance with the embodiment of the present invention.
FIG. 3 is a flowchart showing the operation of a branch inverting section in accordance with the embodiment of the present invention.
FIG. 4A is a sequentially executable source program written in assembly language (hereafter referred to as "assembler source program") to explain a specific operation in accordance with the embodiment of the present invention.
FIG. 4B shows an example of profile information to explain the specific operation in accordance with the embodiment of the present invention.
FIG. 5A shows an example of the first information held in a branch determining section in accordance with the specific example of the embodiment of the present invention.
FIG. 5B shows an example of the compressed first information held in the branch determining section in accordance with the specific example of the embodiment of the present invention.
FIG. 5C shows an example of the second information which is sent from the branch dualizing section and is held in a branch determining section in accordance with the specific example of the embodiment of the present invention.
FIG. 5D shows an example of the third information which is sent from a code generating section and is held in the branch determining section in accordance with the specific example of the embodiment of the present invention.
FIG. 6 shows an example of an assembler source program obtained by the dualization of branch instructions when the probability of "false" is higher than the probability of "true" in accordance with the specific operation of the embodiment of the present invention.
FIG. 7 shows an example of an assembler source program obtained by the dualization of branch instructions when the probability of "true" is higher than the probability of "false" in accordance with the specific operation of the embodiment of the present invention.
FIG. 8 shows an example of a parallelized assembler source program obtained by the dualization of branch instructions when the probability of "false" is higher than the probability of "true" in accordance with the specific operation of the embodiment of the present invention.
FIG. 9 shows an example of a parallelized assembler source program obtained by the dualization of branch instructions when the probability of "true" is higher than the probability of "false" in accordance with the specific operation of the embodiment of the present invention.
FIG. 10 is a flowchart showing the operation of the branch determining section in accordance with the specific example of the embodiment of the present invention.
FIG. 11 is a block diagram showing another construction of a parallelizing compilation apparatus in accordance with the embodiment of the present invention.

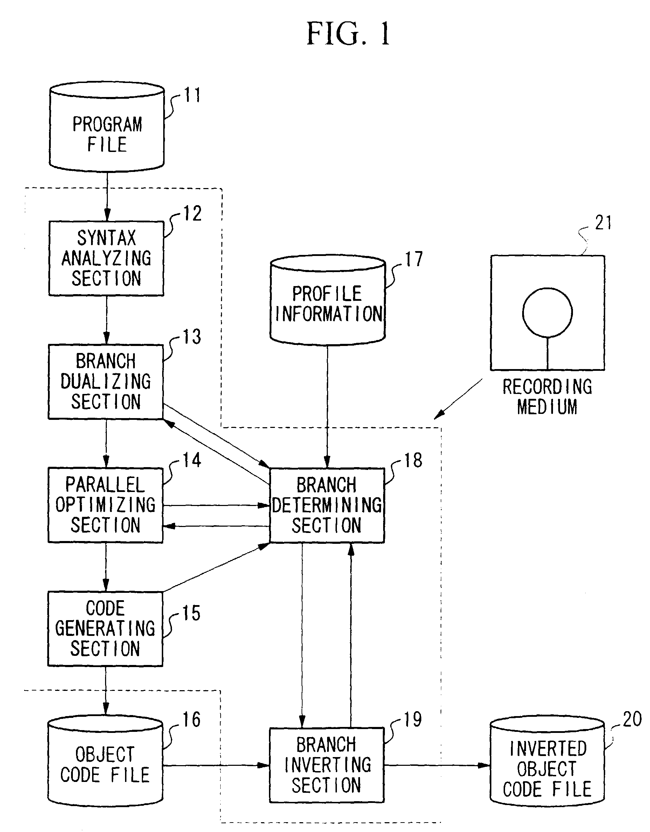

Referring to FIG. 1, a parallelizing compilation apparatus in accordance with an embodiment of the present invention is provided with a program file 11, a syntax analyzing section 12, a branch dualizing section 13, a parallel optimizing section 14, a code generating section 15, an object code file 16, profile information 17, a branch determining section 18, a branch inverting section 19, and an inverted object code file 20 as principal components.

The outline of the operation of each component is as follows.

First, the syntax analyzing section 12 carries out a syntax analysis for one of the source programs (source codes), which are the objects of compilation and are stored in the program file 11 beforehand, to generate intermediate codes.

The branch dualizing section 13 detects conditional branch instructions included in the intermediate codes that are supplied from the syntax analyzing section 12, and outputs dualized intermediate codes in which the conditional branch instructions are dualized based on the results obtained by inquiries of the branch determining section 18, and notifies information on dualized branch instructions to the branch determining section 18.

The parallel optimizing section 14 carries out optimization processing (specifically for parallelization) of the intermediate codes that are output from the branch dualizing section 13, and outputs the optimized intermediate codes.

The code generating section 15 generates and outputs object codes corresponding to the intermediate codes that are output from the parallel optimizing section 14, and notifies information on the object code relating to branch instructions to the branch determining section 18.

The branch determining section 18 reads out the profile information 17 in which information on the past results of transfer of control due to conditional branch instructions is stored, and responds to inquiries sent from the branch dualizing section 13, the parallel optimizing section 14, and the branch inverting section 19. The branch determining section 18 also receives information on branch instructions from the branch dualizing section 13, the parallel optimizing section 14, and the code generating section 15, and holds and manages the received information.

The branch inverting section 19 detects fork instructions contained in the object codes that are stored in the object code file 16, and carries out inversion processing (which will be described later in detail) as the need arises for fork instruction sets corresponding to the dualized branch instructions on the basis of the responses for inquiries of the branch determining section 18.

Here, the parallelizing compilation apparatus in accordance with the present embodiment may be provided with a computer readable recording medium 21. In this case, the parallelizing compiler (parallelizing compilation program) recorded on the recording medium 21 is loaded into the parallelizing compilation apparatus in accordance with the present embodiment, and the apparatus carries out operations as later described under the control of the loaded program.

The recording medium 21 may be comprised of a magnetic disk, a semiconductor memory and the like. Moreover, the parallelizing compiler recorded with the recording medium 21 may be divided into a plurality of subprograms and recorded in two or more recording media so as to form a group of recording media.

Next, the outline of the operation in accordance with the present embodiment of the present invention will be explained with reference to FIGS. 1 to 3.

As shown in FIG. 1, the operation in accordance with the present embodiment includes two kinds of operation that are independently executed, that is to say, the first operation for obtaining the object code file 16 from the program file 11, and the second operation for obtaining the inverted object file 20 from the object code file 16. Here, it should be noted that the contents of the profile information 17 used in the first operation might be different from the profile information 17 used in the second operation. The reason for this is that the situation at the time of program execution may vary depending on various data input to the parallelizing compilation apparatus at the time of the acquisition of profile information 17, thus the transfer of control in the program may also vary.

Hereafter, the operation for obtaining the object code file 16 from the program file 11 will be explained.

First, the syntax analyzing section 12 reads out a source program from the program file 11, and then compiles the program to generate and output corresponding intermediate codes.

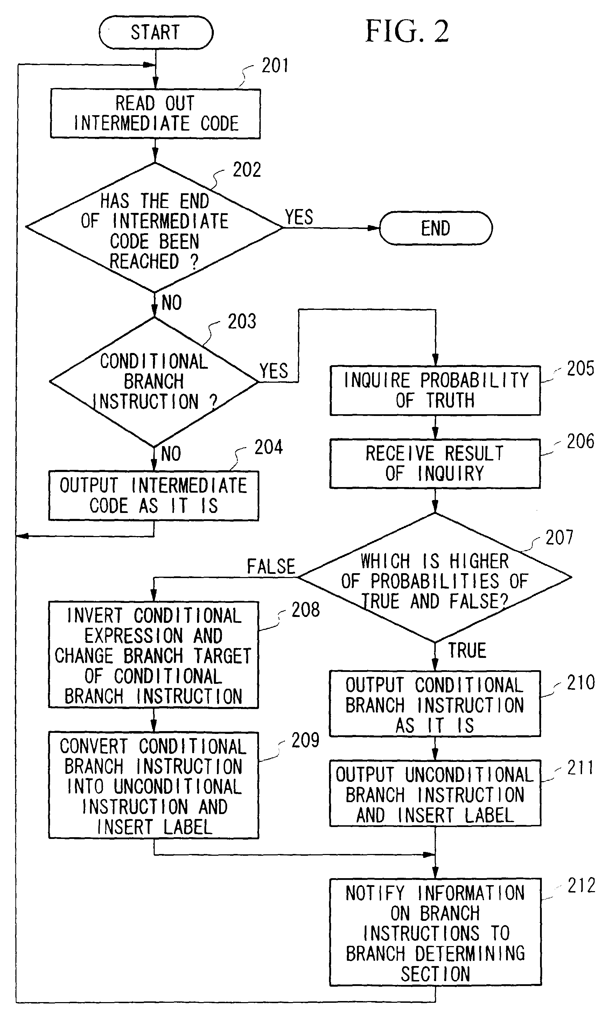

Next, the branch dualizing section 13 receives the intermediate codes that are output from the syntax analyzing section 12, and then dualizes conditional branch instructions included in the intermediate codes. More specifically, the branch dualizing section 13 carries out the operation as shown in FIG. 2.

That is to say, the branch dualizing section 13 reads out one of the intermediate codes (step 201), and if all of the intermediate code has been read and processed (the determination in step 202 is "YES"), the branch dualizing section 13 completes its processing. Conversely, if a part of the intermediate code has not been read (the determination in step 202 is "NO"), the branch dualizing section 13 determines whether the intermediate code that has been read is a conditional branch instruction (step 203).

When the intermediate code is other than a conditional branch instruction, the branch dualizing section 13 outputs this intermediate code as it is (step 204). On the other hand, when the intermediate code is a conditional branch instruction, the branch dualizing section 13 inquires of the branch determining section 18 the truth probability (i.e., the probabilities of both "true" and "false") of the evaluation value of the conditional expression in the conditional branch instruction (step 205).

Upon receipt of the inquiry, the branch determining section 18 reads the profile information 17, and acquires information on the truth probability of the evaluation value of the conditional expression in the conditional branch instruction, and notifies the acquired information to the branch dualizing section 13.

The branch dualizing section 13 receives this information as the response to the inquiry (step 206). Next, if the probability that the evaluation value of the conditional expression is "false" is higher than the probability that the evaluation value of the conditional expression is "true" (the determination in step 207 is "false"), the branch dualizing section 13 carries out the following procedures.

That is to say, the branch dualizing section 13 generates a conditional branch instruction that is identical to the conditional branch instruction to be dualized (hereafter referred to as "dualized conditional branch instruction"), and inverts the conditional expression in the generated conditional branch instruction, and changes the branch target of the generated conditional branch instruction into the address just after the address of the dualized conditional branch instruction, and then inserts the generated conditional branch instruction just before the dualized conditional branch instruction (step 208). Subsequently, the branch dualizing section 13 converts the dualized conditional branch instruction into an unconditional branch instruction without changing the branch target thereof, and then inserts a label corresponding to the branch target (step 208) of the generated conditional branch instruction after the unconditional branch instruction (step 209).

On the other hand, if the probability that the evaluation value of the conditional expression is "true" is higher than the probability that the evaluation value of the conditional expression is "false" (the determination in step 207 is "true"), the branch dualizing section 13 outputs the dualized conditional branch instruction as it is (step 210), and inserts an unconditional branch instruction just after the dualized conditional branch instruction, and then sets the branch target of the inserted unconditional branch instruction to the address of the instruction just after this unconditional branch instruction, and outputs a label corresponding to the branch target of the unconditional branch instruction (step 211).

Whether the determination result in step 207 is "true" or "false", the branch dualizing section 13 notifies information (specifically information indicating that the unconditional branch instruction is not a candidate for parallel optimization processing by the parallel optimizing section 14) on pairs of conditional branch instructions and unconditional branch instructions obtained by the dualization to the branch determining section 18 (step 212). The branch determining section 18 receives the information on the dualized branch instruction from the branch dualizing section 13 to hold and manage the information.

When the result of the inquiry in step 206 indicates that the probability that the evaluation value of the conditional expression is "true" is equal to the probability that the evaluation value of the conditional expression is "false", either the processing performed when the probability of the evaluation value of the conditional expression is "true" is higher or the processing performed when the probability of the evaluation value of the conditional expression is "false" is higher is carried out.

Moreover, so long as the result due to dualization can be obtained in the same manner as described above, the order of processing in steps 208 and 209, which is carried out when the probability that the evaluation value of the conditional expression is "false" is higher, and the order of processing in steps 210 and 211, which is carried out when the probability that the evaluation value of the conditional expression is "true" is higher, are not restricted to those that have been explained earlier.

Next, the parallel optimizing section 14 optimizes the intermediate codes that have been processed by the branch dualizing section 13. When the parallel optimizing section 14 detects branch instructions during an optimization processing for selecting portions being executable in parallel (hereafter referred to as "parallel optimization processing") among various optimization processes, the parallel optimizing section 14 inquires, prior to the parallel optimization processing, of the branch determining section 18 whether the detected branch instructions are candidates for parallel optimization.

Upon receipt of the inquiry from the parallel optimizing section 14, the branch determining section 18 refers to the information on dualized branch instructions that has been provided in step 212 and held, and determines whether the detected branch instructions are candidates for parallel optimization, and then notifies the determination result to the parallel optimizing section 14 as a response to the inquiry.

As a result, the parallel optimizing section 14 carries out the parallel optimization processing based on the response from the branch determining section 18 to output the processing result. That is to say, the parallel optimizing section 14 converts the branch instructions, which are determined as candidate for parallel optimization, into a fork instruction set that executes the instruction sequence beginning at the branch target of a fork instruction in advance of the execution of a conditional terminating instruction.

The code generating section 15 carries out code generation processing for the intermediate codes that have been processed by the parallel optimizing section 14. At this time, the code generating section 15 notifies information on fork instruction sets to the branch determining section 18. The branch determining section 18 receives the information on fork instruction sets from the code generating section 15, and then holds this information to manage inquiries.

Next, the operation for obtaining the inverted object code file 20 from the object code file 16 will be explained in detail.

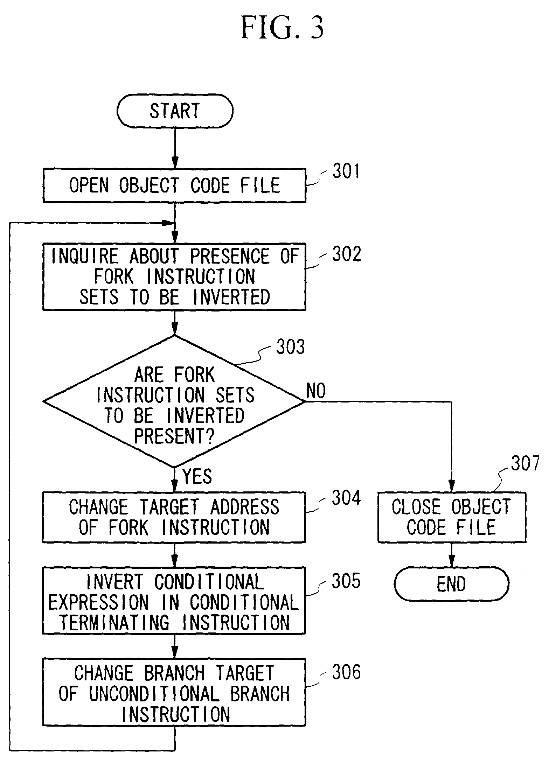

The branch inverting section 19 carries out the operation as shown in FIG. 3. That is to say, the branch inverting section 19 opens the object code file 16 (step 301) to inquire of the branch determining section 18 whether fork instruction sets that have to be inverted are present (step 302).

Upon receipt of the inquiry, the branch determining section 18 determines whether fork instruction sets corresponding to dualized conditional branch instructions are present referring to information on fork instruction sets that has been held and managed. If a fork instruction set has been generated from a dualized conditional branch instruction, the branch determining section 18 obtains the profile information 17 to determine the true probability of the evaluation value of the conditional expression in the dualized conditional branch instruction corresponding to the fork instruction set.

When the determination result shows that the true probability obtained differs from the true probability that has been held in the branch determining section 18, namely, when the conditional expression in the conditional branch instruction has to be inverted, the branch determining section 18 notifies information indicating such a situation to the branch inverting section 19.

When the information on a fork instruction set to be inverted is sent from the branch determining section 18 (the determination in step 303 is "YES"), the branch inverting section 19 changes the branch target of the fork instruction in the fork instruction set (step 304), and inverts the conditional expression in the conditional terminating instruction in the fork instruction set (step 305), and changes the branch target of the unconditional branch instruction in the fork instruction set (step 306). The branch inverting section 19 repeatedly performs the processing described above until the fork instruction sets to be inverted have been exhausted (the determination result in step 303 is "NO"), and then closes the object code file 16 (step 307).

In addition, so long as the inversion processing is carried out in the same manner as described above, the order of the processing in steps 304 to 306 is not restricted to the order explained above.

Next, the operation of the present embodiment in accordance with a more specific example will be explained. The following specific example is provided for ease of understanding the operation of the present embodiment, and does not limit the scope of the present invention. Further, in order to clarify the explanation, the following specific example uses an assembler source program instead of the intermediate codes that have been used so far.

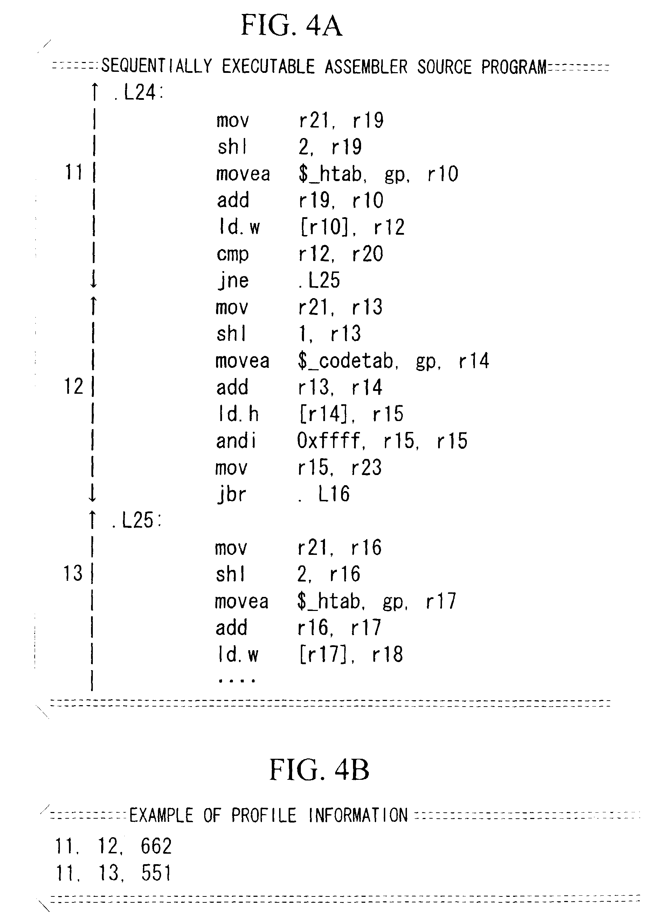

This specific example of the present embodiment assumes that a program to be compiled is the assembler source program as shown in FIG. 4A. In this figure, numbers for distinguishing respective basic blocks (hereafter referred to as "basic block number") and the corresponding ranges thereof are shown in the leftmost portion.

To briefly explain the concept of basic blocks, a basic block comprises a series of operations (instructions) with an entrance and an exit, and the entrance and the exit correspond to the first and the last operations, respectively. Additionally, a basic block contains no branch instructions, thus each operation in a basic block is executed in accordance with the described order. In this way, a basic block corresponds to a certain specific portion in an assembler source program.

FIG. 4A assumes that a dualized conditional branch instruction is the instruction "jne (jump on not equal) .Ln". A conditional branch instruction "jne .Ln" transfers control to the instruction labeled ".Ln", when the comparison result of the comparison instruction "cmp" located just before the conditional branch instruction shows an inequality of two operands (i.e., "r12" and "r20"). The symbol "n" in the label ".Ln" indicates an arbitrary character string, and n is 25 in FIG. 4A. Here, by inverting the conditional expression in the instruction "jne .Ln", a conditional branch instruction "je (jump on equal) .Ln" instruction is obtained. This instruction transfers control to the instruction labeled ".Ln", when the comparison result of the comparison instruction located just before this instruction shows equality of two operands.

Moreover, the specific example of the present embodiment uses the instruction "jbr .Ln" as an unconditional branch instruction.

Additionally, the specific example of the present embodiment assumes the profile information as shown in FIG. 4B, that is to say, the profile information is stored in the form of control flows indicated by two basic block numbers and the number of times transfer of control flow occurs. In FIG. 4B, the first line shows that transfer of the control flow from the basic block numbered "11" to the basic block numbered "12" occurred 662 times, and that transfer of control flow from the basic block numbered "11" to the basic block numbered "13" occurred 551 times.

The profile information 17 may include information on unconditional branch instructions in addition to conditional branch instructions. In the assembler source program shown in FIG. 4A, for example, the end of the basic block numbered "12" is an unconditional branch instruction. Therefore, if the number of the basic block to which label ".L16" belongs is 33 (not shown), the profile information 17 may contain information such as "12, 33, 123".

Here, it is possible to discriminate between a branch due to a conditional branch instruction and a branch due to an unconditional branch instruction, by examining the presence of entries with an identical branch source and different branch targets in the profile information 17.

Next, the operation of the specific example of the present embodiment will be explained in detail on the basis of the aforementioned matters.

In the beginning, an operation for obtaining an object code file 16 from a program file 11 will be explained as in the explanation of the outline operation of the present embodiment.

First, the branch dualizing section 13 detects the conditional branch instruction "jne .L25" in the assembler source program shown in FIG. 4A, which has been generated by the syntax analyzing section 12 (step 203 in FIG. 2), and inquires of the branch determining section 18 the truth probability of the evaluation value of the conditional expression in the conditional branch instruction.

Upon receipt of the inquiry, the branch determining section 18 reads out the profile information 17 to acquire the probability that control transfers to the branch target of the conditional branch instruction when the evaluation value of the conditional expression in the conditional branch instruction is "true" as well as to acquire the probability that control transfers to the instruction just after the conditional branch instruction when the evaluation value of the conditional expression in the conditional branch instruction is "false". Thereafter the branch determining section 18 holds the acquired probabilities.

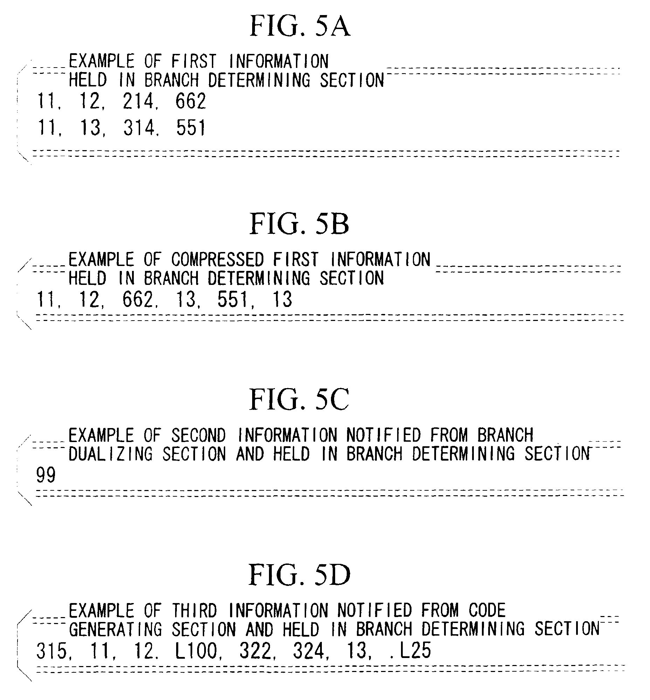

More specifically, the branch determining section 18 receives the profile information shown in FIG. 4B to generate the information shown in FIG. 5A (hereafter referred to as "first information"), and stores the first information therein. In FIG. 5A, the first line indicates that transfer of control flow from the basic block numbered "11" to the basic block numbered "12" occurred 214 times at the time of the previous check (i.e., at the time of the check just before the latest check), and 662 times at the time of the latest check. Here, "check" means determination in the inversion processing which will later be described. Similarly, the second line indicates that transfer of control flow from the basic block numbered "11" to the basic block numbered "13" occurred 314 times at the time of the previous check, and 551 times at the time of the latest check.

In addition, since the branch inverting section 19 compares the previous profile information with the latest profile information during the inversion processing of the conditional expression as later described, the branch determining section 18 holds the number of times control flow transfers at the time of the previous check. Moreover, when generating data for the first time, the branch determining section 18 stores the identical values into the field corresponding to the previous check and the field corresponding to the latest check.

Holding such information enables the branch determining section 18 to respond to an inquiry, "Which is higher, the probability of branching to the basic block of branch target of a conditional branch instruction, or the probability of branching to the basic block of the next instruction of the conditional branch instruction according to the latest profile information?" based on the probability obtained from the number of times transfer of control flow occurs at the time of the latest check.

Additionally, the branch determining section 18 can respond to an inquiry, "Has the relationship in magnitude between the probability of branching to the branch target of a conditional branch instruction and the probability of branching to the next instruction of the conditional branch instruction been reversed between the previous check and the latest check?" by comparing the number of times transfer of control flow occurs at the time of the previous check and those at the time of the latest check.

Moreover, in order to respond to the above-mentioned inquiries, the branch determining section 18 may be constructed to store the first information in the compressed form as shown in FIG. 5B. The compressed information in this figure shows that the number of times control flow transfers to the basic block numbered "12" from the basic block numbered "11" at the time of the latest check was 662 times, and the number of times control flow transfers to the basic block numbered "13" from the basic block numbered "11" at the time of the latest check was 551 times, and the probability of the latter transfer was higher than the probability of the former transfer at the time of the previous check.

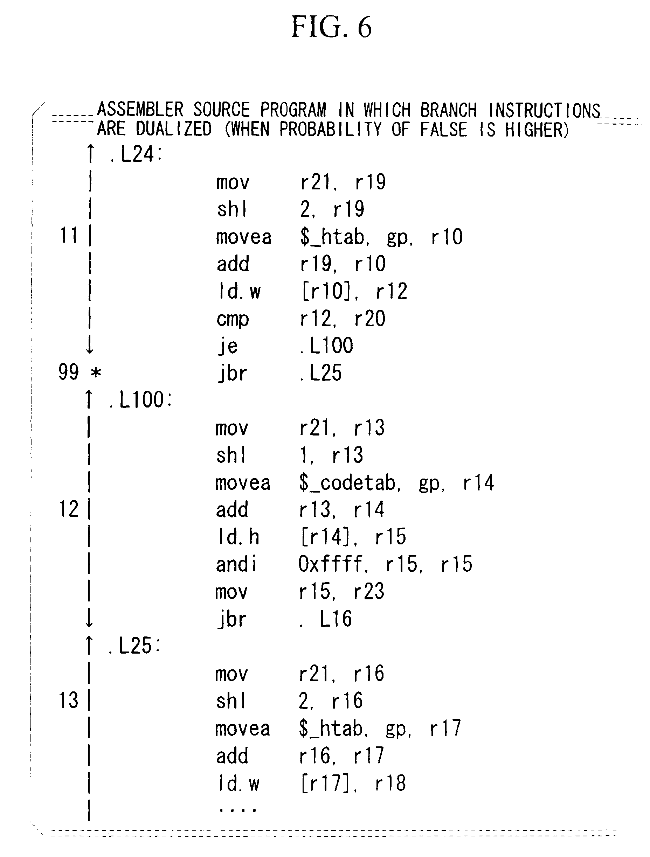

When the result of an inquiry indicates that the probability that the evaluation value of the conditional expression is "false" is higher than the probability that the evaluation value of the conditional expression is "true" (for example, at the time of the latest check shown in FIG. 5A), the branch dualizing section 13 converts the assembler source program shown in FIG. 4 into that shown in FIG. 6.

That is to say, the branch dualizing section 13 generates a conditional branch instruction that is identical to the dualized conditional branch instruction, and inverts the conditional expression in the generated conditional branch instruction, and then changes the branch target of the generated conditional branch instruction into the instruction just after the dualized conditional branch instruction, and inserts the generated conditional branch instruction just before the dualized conditional branch instruction.

More specifically, the branch dualizing section 13 inverts the conditional expression to convert the instruction "jne" into the instruction "je", and changes its branch target to the label ".L100" from the label ".L25", thus outputs a conditional branch instruction "je .L100". Here, the branch target label ".L100", which corresponds to the instruction sequence just after the dualized conditional branch instruction, is assigned so that the number "100" in the label is unique in the overall assembler source program.

Furthermore, the branch dualizing section 13 converts the dualized conditional branch instruction into an unconditional branch instruction without modifying the branch target thereof, and outputs the unconditional branch instruction. More specifically, the branch dualizing section 13 converts the instruction "jne" to the instruction "jbr", thus outputs the unconditional branch instruction "jbr .L25." Here, the branch dualizing section 13 assigns a new number "99" that is unique in the overall assembler source program as the number of the basic block to which the unconditional branch instruction belongs.

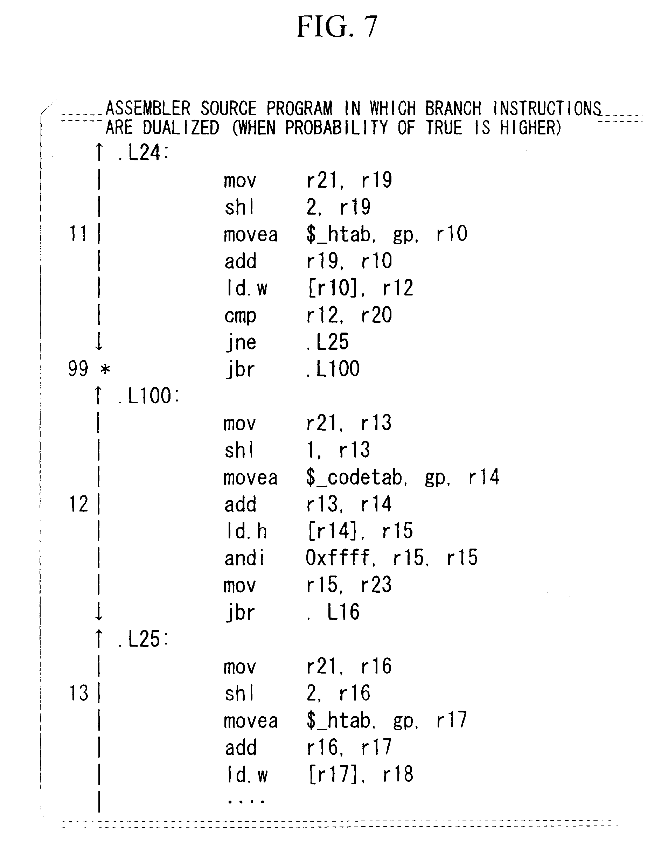

On the other hand, when the result of the inquiry indicates that the probability that the evaluation value of the conditional expression is "true" is higher than the probability that the evaluation value of the conditional expression is "false" (for example, at the time of the previous check shown in FIG. 5A), the branch dualizing section 13 converts the assembler source program shown in FIG. 4 into that shown in FIG. 7.

That is to say, the branch dualizing section 13 outputs the dualized conditional branch instruction as it is, and generates an unconditional branch instruction branching to the instruction just after the dualized conditional branch instruction, and then inserts the generated unconditional branch instruction just after the dualized conditional branch instruction.

More specifically, the branch dualizing sections 13 outputs the conditional branch instruction "jne. L25" as it is, and inserts an unconditional branch instruction "jbr .L100" just after this conditional branch instruction. Here, the branch target label ".L100" in the unconditional branch instruction indicates the instruction sequence just after the dualized conditional branch instruction ("jne"), and a new number "99" that is unique in the overall assembler source program is assigned as the number of the basic block to which the instruction sequence belongs.

In this way, a conditional branch instruction to be dualized is dualized to a new conditional branch instruction and a new unconditional branch instruction. However, the parallel optimizing section 14 does not treat the newly created unconditional branch instruction as a candidate for parallel optimization. Therefore, the parallel optimizing section 14 needs to recognize this fact. To realize this, the branch dualizing section 13 notifies information on the basic block number of the newly created unconditional branch instruction (hereafter referred to as "second information") to the branch determining section 18 which receives and holds this information as shown in FIG. 5C. Hence, this second information indicates that the unconditional branch instruction contained in the basic block numbered "99" is not a candidate for parallel optimization that will be performed by the parallel optimizing section 14.

Subsequently, the parallel optimizing section 14 scans the assembler source program in which branch instructions have been dualized to detect conditional branch instructions, and then inquires of the branch determining section 18 information relating to parallel optimization. In the examples shown in FIGS. 6 and 7, the parallel optimizing section 14 recognizes that the unconditional branch instruction contained in the basic block numbered "99" is not an object of parallel optimization, whereas the unconditional branch instruction contained in the basic block numbered "12" as well as the conditional branch instruction contained in the basic block numbered "11" are objects of parallel optimization.

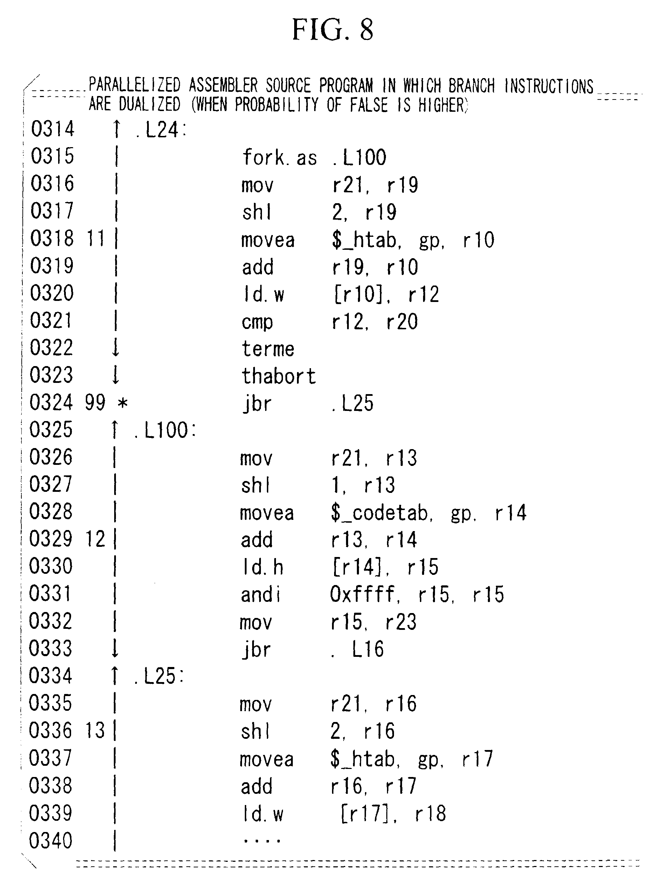

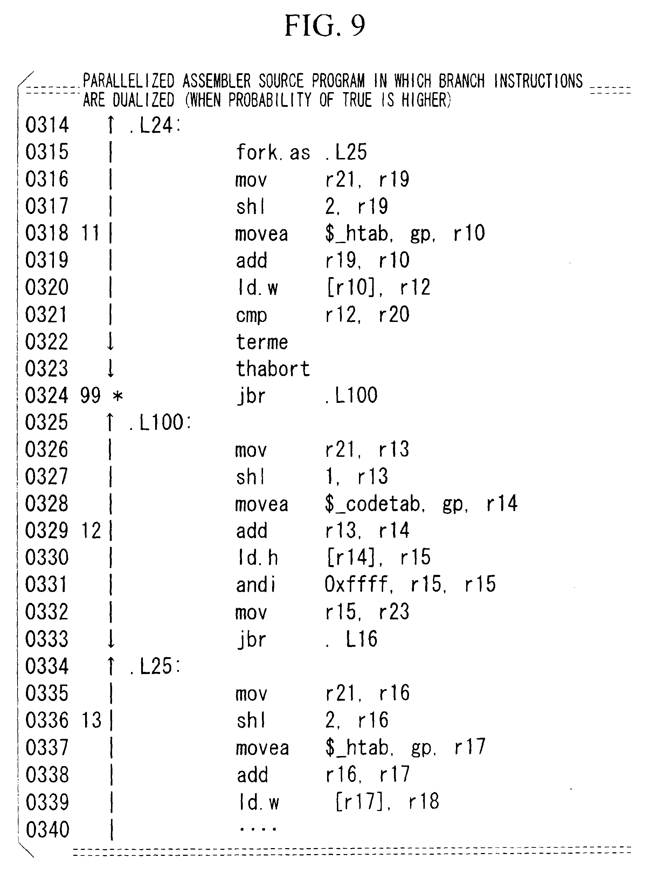

As a result, the parallel optimizing section 14 carries out the parallel optimization of the conditional branch instruction contained in the basic block numbered "11". This parallel optimization enables, for example, generation of the assembler source program shown in FIG. 8 from that shown in FIG. 6, or generation of the assembler source program shown in FIG. 9 from that shown in FIG. 7.

More specifically, the parallel optimizing section 14 converts a conditional branch instruction "je" into a set of a fork instruction "fork.as .Ln", a conditional terminating instruction "terme", and a child thread aborting instruction "thabort". Similarly, the parallel optimizing section 14 converts a conditional branch instruction "jne" into a set of a fork "fork.as .Ln", a conditional terminating instruction "termne", and a child thread aborting instruction "thabort".

A fork instruction, a conditional terminating instruction, and a child thread aborting instruction are explained in the aforementioned paper entitled "Automatic Parallelizing Method for Control-Parallel Multi-Threaded Architecture".

In brief, it is possible to reduce the processing time, as much time as necessary for executing instructions that exists between a fork instruction and a conditional terminating instruction, by means of the following procedures (1) to (3).
(1) Upon detection of a fork instruction, the execution environment of a processor that is executing the fork instruction is copied into another processor, and then execution of the processing which begins at the target address of the fork instruction is immediately initiated in another processor.
(2) When the condition of a conditional terminating instruction is satisfied, the processor that executed the fork instruction ends processing thereof, and then transfers processing to another processor that has executed processing which begins at the target address of the fork instruction.
(3) When a child thread aborting instruction is executed without satisfying the condition of a conditional terminating instruction, the results obtained by the processing that has been executed in another processor are discarded.

By the way, it is another feature of the present invention to replace fork instruction sets, which correspond to dualized conditional branch instructions, without re-compilation. This requires storing the positions of fork instruction sets. In FIGS. 8 and 9, as an example for storing the positions of statements in assembler source programs, line numbers defined in the assembler source programs are held concerning fork instructions and conditional terminating instructions. The numbers placed at the leftmost portion in these figures show the line numbers in the assembler source programs.

Next, the code generating section 15 carries out code generation for the output result from the parallel optimizing section 14, and notifies the information shown in FIG. 5D (hereafter referred to as "third information") to the branch determining section 18.

The third information, which corresponds to the assembler source program shown in FIG. 8, indicates that the fork instruction at line 315 corresponds to the transfer of control flow to the basic block numbered "12" from the basic block numbered "11", the label of the basic block numbered "12" is ".L100", line 322 includes the conditional terminating instruction corresponding to the fork instruction, line 324 includes the unconditional branch instruction, which corresponds to transfer of control flow to the basic block numbered "13", and the label given to the basic block numbered "13" is ".L25."

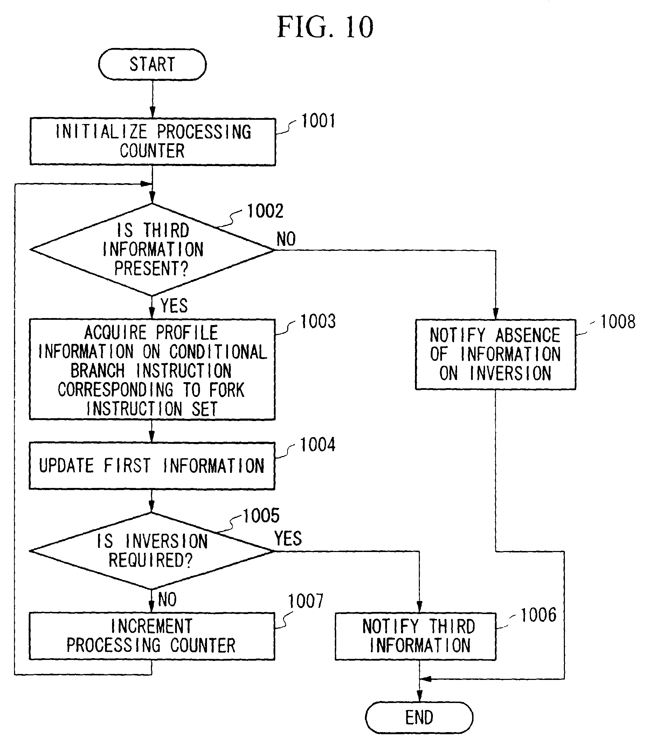

Next, the inversion processing in which the branch inverting section 19 inverts fork instruction sets utilizing the first and third information will be explained in detail. The branch inverting section 19 inquires of the branch determining section 18 whether one or more fork instruction sets to be inverted are present (step 302 in FIG. 3). Upon receipt of the inquiry from the branch inverting section 19, the branch determining section 18 operates in accordance with the flowchart shown in FIG. 10.

That is to say, the branch determining section 18 initializes a processing counter, which is used for reading the third information, so as to point to the first entry in the third information (step 1001), and then determines the presence of the third information (step 1002). When the third information is present, the branch determining section 18 acquires the basic block number of the branch source from the third information to obtain the profile information regarding this basic block (step 1003). If the third information is formed as shown in FIG. 5D, the second field of the third information corresponds to the basic block number of the branch source.

Then, the branch determining section 18 updates the first information that is held therein based on the profile information obtained (step 1004). That is to say, the number of times the control flow transfers at the time of the latest check is set to the number of times the control flow transfers at the time of the previous check. In addition, the number of times the control flow transfers obtained from the current profile information is set to the number of times the control flow transfers at the time of the latest check.

Next, the branch determining section 18 determines whether the inversion of the conditional expression is required, based on the first information thus updated (step 1005). When it is determined that the inversion is required, the branch determining section 18 notifies the third information corresponding to a fork instruction set to be inverted to the branch inverting section 19 (step 1006). Conversely, when it is determined that no inversion is required, the branch determining section 18 increments the processing counter to point to the next entry in the third information (step 1007).

On the other hand, when it is determined in step 1002 that the third information is absent, the branch determining section 18 notifies the absence of information for inversion processing to the branch inverting section 19 (step 1008).

Upon notification of the third information, the branch inverting section 19 changes the branch target of the fork instruction, which is described at the line numbered "315" indicated by the first field of the third information, into the address corresponding to the label (".L25") indicated by the eighth field of the third information. Subsequently, the branch inverting section 19 inverts the condition of the conditional terminating instruction ("terme"), which is described at the line (numbered "322") indicated by the fifth field of the third information, and then changes the branch target of the unconditional branch instruction, which is described at the line (numbered "324") indicated by the sixth field of the third information, into the address corresponding to the label ("L100") indicated by the fourth field of the third information.

More specifically, the assembler source program shown in FIG. 8 is converted into that shown in FIG. 9. Conversely, the assembler source program shown in FIG. 9 is converted into that shown in FIG. 8. Accordingly, an object code file can be obtained without re-compilation (i.e., processing for generating an assembler code from a source code) while maintaining performance in compiling processing.

As described above, a parallelizing compilation apparatus according to the present embodiment generates object codes that execute processing, which begin at the branch target of all branch targets of a conditional branch instruction where the control transfers with higher probability, in advance of the conditional branch instruction in parallel with the processing prior to the conditional branch instruction. More specifically, the present invention dualizes a conditional branch instruction to be dualized into a conditional branch instruction and an unconditional branch instruction with reference to profile information on transfer of control at the time of program execution, and inverts the conditional expression in a conditional terminating instruction included in a fork instruction set corresponding to the dualized conditional branch instruction, and exchange branch targets of a fork instruction and an unconditional branch instruction.

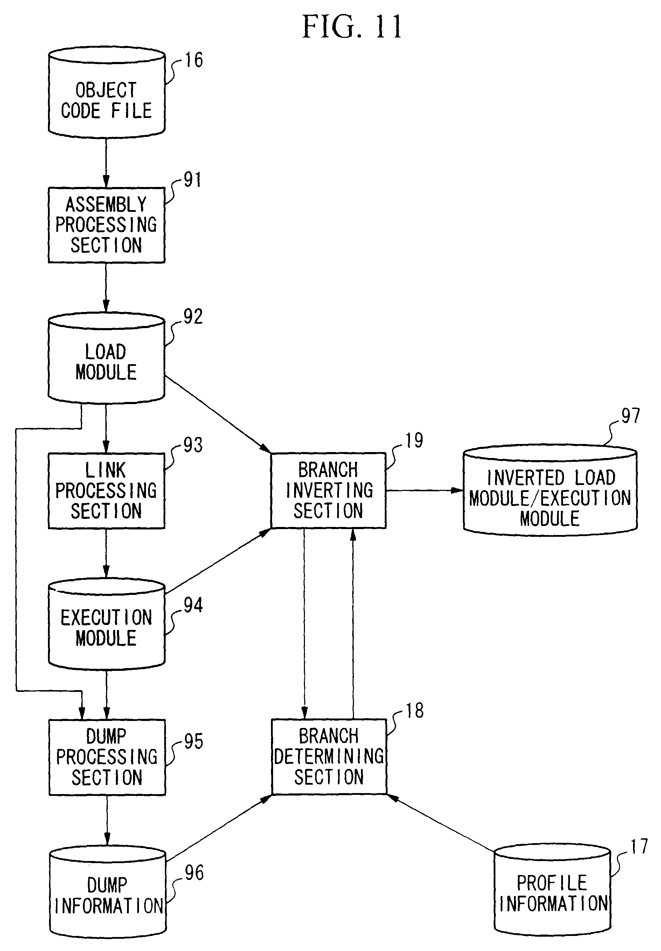

By the way, the operation of the above-mentioned embodiment has been explained based on the assumption that the object code file 16 shown in FIG. 1 contains assembler source programs. However, the parallerizing compiling apparatus may be constructed such that the object code file 16 contains load modules or execution modules and these modules are directly rewritten. Various constructions can be devised for such a variant embodiment, and an example of such constructions is shown in FIG. 11. In FIG. 11, the construction for generating an inverted load module from the load module 92 is united with the construction for generating an inverted execution module from the execution module 94. Additionally, in FIG. 11, those components, which are the same as those in FIG. 1, are given the same reference numerals and their explanations are omitted.

In order to rewrite load modules or execution modules directly, among the aforementioned third information, information on the positions of fork instructions, conditional terminating instructions and unconditional branch instructions that have been generated by dualization processing, and addresses (labels) of branch targets of fork instructions and unconditional branch instructions are required.

However, the code generating section 15 shown in FIG. 1 cannot generate information on positions and labels required for rewriting the load modules or the execution modules. Therefore, this information must be generated by dumping or disassembling load modules or execution modules in which predetermined information has been embedded as debug information, or by matching the structure of assembler source programs with the structure of programs obtained by dumping or disassembling the load modules or the execution modules.

In accordance with the variant embodiment, rewriting of load modules or execution modules directly using dump information 96 enables inversion of fork instruction sets, in the same manner as in the above-mentioned embodiment such that the conditional expressions in conditional branch instructions included in assembler source programs are inverted by means of the third information.

In FIG. 11, an assembly processing section 91 reads out an assembler source program stored in an object code file 16, and then assembles the program to generate a load module 92. In the assembly process, the assembly processing section 91 embeds the aforementioned debug information in the load module 92. A link processing section 93 reads out the load module 92, and performs link processing of the module to generate an execution module 94 containing executable codes. When generating an inverted load module from the load module 92, a dump processing section 95 reads out the load module 92, and extracts the debug information from the module to output as dump information 96. In this case, transfer of information from the execution module 94 to the branch inverting section 19 can be omitted. On the other hand, when generating an inverted execution module from the execution module 94, the dump processing section 95 reads out the execution module 94, and extracts the debug information from the module to output as dump information 96. In this case, transfer of information from the load module 92 to the branch inverting section 19 can be omitted. A branch inverting section 19 carries out the aforementioned inversion processing to either the load module 92 or the execution module 94 to generate an inverted load module/execution module 97. A branch determining section 18 carries out the determining operation in the same manner as in the above embodiment with reference to the dump information 96 and the profile information 17. In addition, the object code file 16 is generated by the syntax analyzing section 12, the branch dualizing section 13, the parallel optimizing section 14 and the code generating section 15.

As stated above, in the present embodiment, a conditional branch instruction to be dualized is replaced with a pair of conditional branch instructions with high probability of the satisfaction of the condition thereof and an unconditional branch instruction, and then the parallel optimization processing is carries out. This enables the generation of object codes that can execute processing, which begins at the branch target where control transfers with higher probability, in advance of the execution of a conditional branch instruction in parallel with the processing, without the rearrangement of basic blocks which constitute the processing flow.

Moreover, in the present embodiment, when the probability of transfer of control to the branch target of a conditional branch instruction may vary, object codes that execute processing, which begins at the branch target where control transfers with higher probability, in advance of the execution of a conditional branch instruction in parallel with the processing prior to the conditional branch instruction, by carrying out inversion processing for fork instruction sets included in the object code in which the probability of transfer of control has been inverted.

## Claims

1. A parallelizing compilation apparatus comprising:
a syntax analyzing section (12) for analyzing the syntax of a source program (11) and outputting codes obtained by the syntax analysis;
a profile information storing section (17) for accumulating profile information on past results of execution of conditional branch instructions;
a branch determining section (18) for determining the higher probability of the probabilities that the evaluation value of the conditional expression in a conditional branch instruction included in said codes is true or false based on said profile information;
a branch dualizing section (13) for replacing a conditional branch instruction included in said codes with another conditional branch instruction as a first branch instruction in which the branch target points to the processing that begins at the branch target of said conditional branch instruction where said conditional branch instruction branches with higher probability, and an unconditional branch instruction as a second branch instruction in which the branch target points to the processing that begins at the branch target where said conditional branch instruction branches with lower probability, based on the determination result by said branch determining section; and
a parallel optimizing section (14) for converting said first branch instruction included in the codes output from said branch dualizing section into an instruction set for executing the processing beginning at the branch target of said first branch instruction in advance of the evaluation of the conditional expression in said first branch instruction, when the evaluation value of the conditional expression in said first branch instruction is true.

2. A parallelizing compilation apparatus according to claim 1, further comprising:
a first information storing section (18) for storing first information on the history of said profile information for both the latest determination and the previous determination just before said latest determination in said branch determining section; and
a branch inverting section (19) for detecting that the determination results by said branch determining section for the latest determination and the previous determination has reversed based on said first information, and inverting information relating to conditional branching included in said instruction set.

3. A parallelizing compilation apparatus according to claim 1 or 2, wherein
when the probability that the evaluation value of said conditional expression is false is higher, said branch dualizing section generates a conditional branch instruction that is identical to said conditional branch instruction as said first branch instruction, inverts the conditional expression therein, and sets the branch target thereof to the address of the instruction just after said conditional branch instruction, and changes said conditional branch instruction into an unconditional branch instruction as said second branch instruction, otherwise
when the probability that the evaluation value of said conditional expression is true is higher, said branch dualizing section generates said second branch instruction in which the branch target address points to the instruction just after said conditional branch instruction.

4. A parallelizing compilation apparatus according to claim 1, 2 or 3, wherein said parallel optimizing section converts a conditional branch instruction included in the codes output from said branch dualizing section into a first instruction (fork) for executing the instruction sequence of the branch target of said conditional branch instruction in another processor in advance of the evaluation of the conditional expression in said conditional branch instruction, a second instruction (terme, termne) for transferring control to said another processor when the evaluation value of said conditional expression is true, and a third instruction (thabort) for aborting the execution of the instruction sequences in said another processor when the evaluation value of said conditional expression is false.

5. An apparatus according to claim 1, 2, 3 or 4, further comprising:
a first information storing section (18) for storing first information on the history of said profile information for both the latest determination and the previous determination just before said latest determination in said branch determining section; and
a branch inverting section (19) for detecting that the determination result by said branch determining section for the latest determination and the previous determination has reversed based on said first information, exchanging the branch target of said first instruction and the branch target of an unconditional branch instruction corresponding to said second branch instruction, and inverting the conditional expression of said second instruction.

6. An apparatus according to claim 1, 2, 3, 4 or 5, further comprising:
a second information storing section (18) for storing optimization information indicating that branch instructions are not candidates for parallel optimization,
wherein said branch dualizing section generates said optimization information to store in said second information storing section, and said parallel optimizing section determines whether to optimize branch instructions with reference to said optimization information held in said second information storing section.

7. A parallelizing compilation apparatus according to claim 6, wherein said branch dualizing section generates said optimization information indicating that said first branch instruction is a candidate for parallel optimization while said second branch instruction is not a candidate for parallel optimization.

8. An apparatus according to any one of claims 2 to 7, further comprising:
a code generating section (15) for generating object codes (16) from the codes optimized by said parallel optimizing section;
a third information storing section (18) for storing third information on the positions and the branch targets of said instruction set in said source program, wherein said code generating section generates said third information to store in said third information storing section, and said branch inverting section operates based on said third information stored in said third information storing section.

9. An apparatus according to any one of claims 2 to 8, further comprising:
a module generating section (91, 93) for generating a load module (92) or an execution module (94) from said codes, and embedding information on the positions and the branch targets of said instruction set in said source program as debug information into said module; and
a dump processing section (95) for dumping or disassembling said module to extract said debug information,
wherein said branch inverting section inverts information on conditional branching included in said module, based on said debug information extracted by said dump processing section.

10. An apparatus according to any one of claims 2 to 8, further comprising:
a module generating section (91, 93) for generating a load module (92) or an execution module (94) from said codes; and
a dump processing section (95) for dumping or disassembling said module, wherein said branch inverting section inverts information on conditional branching included in said module, based on the result by matching the structure of the codes generated by said dump processing section and the structure of the code generated by said syntax analyzing section.

11. A parallelizing compilation method comprising the steps of:
a profile information storing step for storing profile information on past results of execution of conditional branch instructions;
a syntax analyzing step for analyzing the syntax of a source program (11) and outputting codes obtained by the syntax analysis;
a branch determining step (203 - 207) for determining the higher probability of the probabilities that the evaluation value of the conditional expression in a conditional branch instruction included in said codes is true or false, based on said profile information;
a branch dualizing step (208 - 212) for replacing a conditional branch instruction included in said codes with another conditional branch instruction as a first branch instruction in which the branch target points to the processing that begins at the branch target of said conditional branch instruction where said conditional branch instruction branches with higher probability, and an unconditional branch instruction as a second branch instruction in which the branch target points to the processing that begins at the branch target where said conditional branch instruction branches with lower probability, based on the determination result by said branch determining step; and
a parallel optimizing step for converting said first branch instruction included in the codes generated by said branch dualizing step into an instruction set for executing the processing beginning at the branch target of said first branch instruction in advance of the evaluation of the conditional expression in said first branch instruction, when the evaluation value of the conditional expression in said first branch instruction is true.

12. A computer readable recording medium on which is recorded a parallelizing compilation program, said program effecting the process of:
a profile information storing process for storing profile information on past results of execution of conditional branch instructions;
a syntax analyzing process for analyzing the syntax of a source program (11) and outputting codes obtained by the syntax analysis;
a branch determining process (203 - 207) for determining the higher probability of the probabilities that the evaluation value of the conditional expression in a conditional branch instruction included in said codes is true or false, based on said profile information;
a branch dualizing process (208 - 212) for replacing a conditional branch instruction included in said codes with another conditional branch instruction as a first branch instruction in which the branch target points to the processing that begins at the branch target of said conditional branch instruction where said conditional branch instruction branches with higher probability, and an unconditional branch instruction as a second branch instruction in which the branch target points to the processing that begins at the branch target where said conditional branch instruction branches with lower probability, based on the determination result by said branch determining process; and
a parallel optimizing process for converting said first branch instruction included in the codes generated by said branch dualizing process into an instruction set for executing the processing beginning at the branch target of said first branch instruction in advance of the evaluation of the conditional expression in said first branch instruction, when the evaluation value of the conditional expression in said first branch instruction is true.

13. A group of computer readable recording media on which is recorded a parallelizing compilation program according to claim 12, wherein said program is divided into a plurality of subprograms and said subprograms are recorded on the plurality of recording media.
